Europäisches Patentamt

(19) European Patent Office     (11) Veröffentlichungsnummer : **0 175 043**

Office européen des brevets     **B1**

(12)     **EUROPÄISCHE PATENTSCHRIFT**

(45) Veröffentlichungstag der Patentschrift :     (51) Int. Cl.⁴ : **C 08 J   3/22**, C 08 L 21/00
09.09.87

(21) Anmeldenummer : 84890171.6

(22) Anmeldetag : 14.09.84

(54) **Werkstoff auf Basis einer Kautschukmischung für Hartgummi und seine Verwendung für Motorbauteile.**

(43) Veröffentlichungstag der Anmeldung :
26.03.86 Patentblatt 86/13

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
GB-A- 2 054 626
ENCYCLOPEDIA OF POLYMER SCIENCE AND TECH-
NOLOGY, vol. 12, 1970, Seiten 161-177, Interscience,
New York, US

(73) Patentinhaber : Semperit Aktiengesellschaft
Modecenterstrasse 22
A-1031 Wien (AT)

(72) Erfinder : Affenzeller, Josef, Dr.
Grazer Strasse 44
A-8045 Graz (AT)
Erfinder : Jost, Wolf-Deiter
Haidfeldstrasse 23a
A-4060 Leonding-Doppl (AT)

(74) Vertreter : Müller, Hans–Jürgen, Dipl.-Ing. et al
Müller, Schupfner & Gauger Lucile-Grahn-Strasse 38
Postfach 80 13 69
D-8000 München 80 (DE)

## Beschreibung

Die Erfindung betrifft einen Werkstoff auf Basis einer Kautschukmischung für Hartgummi.

Derartige Werkstoffe werden bisher vor allem dort eingesetzt, wo die Eigenschaften des Hartgummi, wie chemische Widerstandsfähigkeit und ausgezeichnete elektrische Isolierfähigkeit, wesentlich sind. Ein derartiger Werkstoff hat gegenüber Kunststoffen den Vorteil, daß sein Elastizitätsmodul durch Variation der Schwefeldosierung und des Füllstoffgehaltes in weiten Bereichen variiert werden kann. Diese « klassischen » Hartgummi besitzen eine gewisse Thermoplastizität, wodurch ein Einsatz bei Bauteilen, die einer höheren Temperaturbelastung unterliegen, begrenzt ist. Auch konnte dieser Werkstoff bisher dort nicht eingesetzt werden, wo eine sehr hohe Werkstoffestigkeit erforderlich ist, beispielsweise als Ersatz für Metallbauteile im Maschinen- Anlagen- und Motorenbau. Gerade dort ist es jedoch wünschenswert, die Vorteile von Hartgummi, wie beispielsweise die chemische Beständigkeit, auszunützen und ein Material zu verwenden, daß gegen unterschiedlichste Angriffe, wie Säuren, Laugen, Öle, beständig ist.

Die Erfindung hat sich daher die Aufgabe gestellt, einen Werkstoff der eingangs genannten Art herzustellen, der einerseits eine hohe Festigkeit und andererseits eine wesentlich erhöhte Temperaturbeständigkeit besitzt, sodaß er als Material für bisher aus Metall gefertigte Bauteile insbesondere im Maschinen-, Anlagen- oder Motorenbau eingesetzt werden kann.

Gelöst wird die gestellte Aufgabe erfindungsgemäß dadurch, daß in die Kautschukmischung ein Prämix bestehend aus hochfesten organischen Fasern und einem flüssigen Duroplast eingearbeitet ist.

Durch die erfindungsgemäße Maßnahme wird ein hochfester Werkstoff mit einer hohen Temperaturbeständigkeit geschaffen. Durch entsprechende Auswahl der Elastomere für die Kautschukmischung wird zusammen mit dem Duroplastanteil und der Faserverstärkung ein Werkstoff erhalten, der neben hoher Temperaturbeständigkeit und hoher mechanischer Festigkeit eine der den jeweiligen Verwendungszweck anpaßbare chemische Beständigkeit besitzt. Das Prämix aus hochfesten organischen Fasern mit flüssigem Duroplast gestattet es, derartige Fasern nestfrei in die Mischung einzuarbeiten. Bisherige Versuche ohne diese Maßnahme scheiterten insbesondere daran, daß keine homogene Verteilung der Fasern in der Mischung erzielbar war, sondern unverteilte Fasernester entstanden, die den Werkstoff unbrauchbar machten. Die hervorragenden Eigenschaften des erfindungsgemäßen Werkstoffes machen diesen Werkstoff zur Verwendung als Material für Maschinen-, Anlagen- oder Motorbauteile besonders interessant.

Eine weitere erfindungsgemäße Maßnahme besteht darin, daß die hochfesten organischen Fasern mit Flüssigkautschuk vorimprägniert sind. Diese Maßnahme erlaubt das Einarbeiten sehr hoher Faseranteile, für den Fall, daß eine dem jeweiligen Verwendungszweck des Werkstoffes angepaßte und vorteilhafte Duroplastmenge nicht überschritten werden soll. In diesem Fall werden Teile des eingesetzten Kautschuks durch Flüssigkautschuk ersetzt.

Als besonders vorteilhaft hat es sich erwiesen, wenn erfindungsgemäß in das Prämix als hochfeste organische Fasern Aramidfasern eingearbeitet sind.

Erfindungsgemäß sind auch Polyesterfasern und Polyacrylnitrilfasern bestens geeignet. Diese Faserarten lassen sich, da sie den beim Mischvorgang auftretenden Scherbeanspruchungen weitgehend standhalten, in der Mischung homogen verteilen und sind unter ihren Handelsbezeichnungen Kevlar®, Trevira® und Dolanit® in unterschiedlichen Längen erhältlich.

Besonders problemlos lassen sich erfindungsgemäß Fasern einer Länge von etwa 0,5 bis 70 mm, vorzugsweise 1 bis 60 mm, in das Prämix einarbeiten. Fasern in diesen Längen gewährleisten auch die hohe mechanische Festigkeit des erfindungsgemäßen Werkstoffes.

Erfindungsgemäß beträgt weiters der Faseranteil, bezogen auf 100 Gewichtsteile Kautschuk, 10 bis 100 Teile, vorzugsweise bis etwa 60 Teile. Der Faseranteil wird je nach Verwendungszweck des erfindungsgemäßen Werkstoffes gewählt werden. Die angegebenen Bereiche garantieren hiebei ein problemloses homogenes Einarbeiten der Fasern in die Mischung.

Ein weiteres Merkmal der Erfindung besteht darin, daß als flüssiges Duroplast ein flüssiges Phenolharz, ein flüssiges Polyesterharz, ein flüssiges Epoxydharz oder Mischungen dieser Harze einsetzbar sind. Hiebei werden Phenol- und Polyesterharz dann eingesetzt werden, wenn eine hohe Temperaturbeständigkeit des Werkstoffes erwünscht ist, Epoxydharz wird insbesondere dann eingesetzt werden, wenn eine chemische Beständigkeit des Werkstoffes von Interesse ist.

Der Harzanteil, bezogen auf 100 Gewichtsteile Kautschuk, wird hiebei erfindungsgemäß etwa 20 bis 200 Teile betragen.

Als Kautschuk für die Kautschukmischung ist ein Nitril- oder ein Naturkautschuk oder eine Mischung dieser beiden besonders geeignet.

Dem Werkstoff können, je nach Verwendungszweck Füllstoffe, vorzugsweise im Ausmaß von 200 bis 1 000 Teile, bezogen auf 100 Teile Kautschuk beigemengt werden. Durch die Auswahl des Füllstoffes kann beispielsweise eine dem jeweiligen Verwendungszweck angepaßte Chemikalienbeständigkeit erreicht werden.

Enthält der Werkstoff nun erfindungsgemäß schwere Füllstoffe wie beispielsweise Schwerspat oder ein Metallpulver, so entsteht ein Werkstoff, der nicht nur die schon oben beschriebenen hervorragenden Eigenschaften aufweist, sondern dessen spezifisches Gewicht über dem des Aluminiums liegen kann. Das macht diesen Werkstoff besonders zur Lärmdämmung von Verbrennungsmotoren (Fahrzeugmotoren, stationären Motoren) interessant. Hiebei wird erfindungsgemäß der eine störende Schallquelle darstellende Motorbauteil, wie beispielsweise Ventildeckel, Stirnradgetriebedeckel, Ölwanne oder Ölkühlerdeckel aus diesem Werkstoff gefertigt. Bisher wurde bei Verbrennungsmotoren entweder mit der Kapselung gearbeitet, wobei diese Methode zwar recht wirksam, aber oft aus Platzgründen nicht durchführbar ist, oder es wurden entsprechende Gestaltungsmaßnahmen bei den betroffenen Motorbauteilen gesetzt. Wo mit einer Kapselung oder Teilkapselung eine Lärmdämmung erzielt werden kann, ist der wesentliche Nachteil der Erschwerung der Zugänglichkeit des Motors gegeben, abgesehen davon, daß diese Methode sehr aufwendig und teuer ist, was auch auf die erwähnten Maßnahmen zur schalldämmenden Gestaltung von Motorbauteilen zutrifft.

Gegenüber dem herkömmlichen Material für derartige Motorbauteile wie beispielsweise Aluminium oder Stahlblech wird die erforderliche mechanische Festigkeit und Temperaturbeständigkeit sowie eine wesentlich verbesserte Körper- und Luftschalldämmung erzielt, wenn die Werkstoffmischung für diese Motorbauteile, bezogen auf 100 Gewichtsteile Kautschuk, etwa 70 bis 100 Teile Kautschuk, beispielsweise Nitrilkautschuk, bis zu 30 Teile Flüssigkautschuk, 30 bis 50 Teile Vernetzungshilfsmittel, vorzugsweise Schwefel, 30 bis 60 Teile Vulkanisationshilfsmittel, beispielsweise Zinkoxyd, 3 bis 6 Teile Vulkanisationsbeschleuniger, 500 bis 700 Teile schweren Füllstoff, 50 bis 100 Teile flüssiges Duroplast, beispielsweise Phenolharz, etwa 10 % des Phenolharzanteiles Harzvernetzungsmittel und 20 bis 50 Teile hochfeste organische Fasern, beispielsweise Aramidfasern enthält.

Ein aus einem derartigen Werkstoff gefertigter Motorbauteil liefert ein äußerst günstiges Geräuschverhalten hinsichtlich Körperschalldämpfung und Luftschalldämpfung. Die Körperschalldämpfung kann hiebei nach einem weiteren Erfindungsgedanken noch dadurch wesentlich verbessert werden, wenn der Motorbauteil vom Motorblock schwingungstechnisch abgekoppelt ist.

Bei einer erfindungsgemäßen Ausführung zur schwingungstechnischen Abkoppelung wird vorgeschlagen, daß der zum Befestigen am Motorblock vorgesehene Flansch des Motorbauteiles in eine vorzugsweise ölfeste und temperaturbeständige Weichgummilage eingebettet ist.

Sind größere Schraubabstände vorhanden, so kann es für eine optimale Abdichtung des betreffenden Motorbauteiles gegenüber dem Motorblock vorteilhaft sein, wenn zum Befestigen des Motorbauteiles am Motorblock ein metallischer Hilfsrahmen vorgesehen ist, der getrennt vom Motorbauteil in die Weichgummilage eingebettet ist.

Der erfindungsgemäße Werkstoff, seine Herstellung, seine physikalischen Eigenschaften und bevorzugten Anwendungen werden nun im folgenden beispielhaft näher erläutert. Für den aus einer Kautschukmischung für Hartgummi und einem Prämix aus hochfesten organischen Fasern und einem flüssigen Duroplast hergestellten Werkstoff sind, bezogen auf 100 Gewichtsteile Kautschuk folgende Bereiche für Mischungsverhältnisse besonders vorteilhaft :

Kautschukmischung (Gew. Teile):
  50 bis 100 Kautschuk
  30 bis 50 Vernetzungshilfsmittel
  10 bis 100 Vulkanisationshilfsmittel
    1 bis 6 Vulkanisationsbeschleuniger
200 bis 1 000 Füllstoffe
Prämix :
  20 bis 200 flüssiger Duroplast
   2 bis 20 Harzvernetzungsmittel
   0 bis 50 Flüssigkautschuk
  10 bis 100 hochfeste organische Fasern

Als Kautschuk für die Kautschukmischung können beispielsweise Nitrilkautschuk, Naturkautschuk, Styrolbutadienkautschuk oder übliche Gemische dieser Kautschukarten verwendet werden. Dieser Kautschuk wird mit den üblichen Zuschlagstoffen wie Vulkanisationshilfsmittel (beispielsweise Zinkoxyd, Bleioxyd), Vernetzungshilfsmittel (beispielsweise Schwefel) und Vulkanisationsbeschleuniger gemischt. Als Füllstoff kommen je nach Verwendungszweck, beispielsweise für Schalldämmanwendungen schwere Füllstoffe wie Schwerspat oder ein Metallpulver (beispielsweise Eisen, Blei) in Frage, oder eine Reihe anderer bekannter Füllstoffe, die eine dem jeweiligen Verwendungszweck angepaßte chemische Beständigkeit aufweisen.

Als flüssiges Duroplast wird insbesondere Phenolharz, Polyesterharz, Epoxydharz oder eine Mischung dieser Harze mit einem handelsüblichen Harzvernetzungsmittel Verwendung finden. Als Flüssigkautschuk ist beispielsweise niedermolekularer Synthesekautschuk oder depolymerisierter Naturkautschuk geeignet.

Besonders geeignete hochfeste organische Fasern sind Aramidfasern, Polyesterfasern und Polyacrylnitrilfasern. Aramidfasern sind unter der Handelsbezeichnung Kevlar[®] in unterschiedlichen Längen oder als Pulpfasern erhältlich. Polyesterfasern sind unter der Handelsbezeichnung Trevira[®] und Polyacrylnitrilfasern unter der Handelsbezeichnung Dolanit[®] auf dem Markt. Bevorzugt werden Fasern mit einer Stapellänge von 0,5 bis 70 mm, insbesondere von etwa 1 bis 60 mm, Verwendung finden, die die hohe mechanische Festigkeit des Werkstoffes gewährleisten und in die Werkstoffmischung gut eingearbeitet werden können.

Bei der Herstellung des erfindungsgemäßen Werkstoffes wird ein Prämix aus den verwendeten Fasern unter Zugabe von Flüssigharz und gegebenenfalls Flüssigkautschuk erstellt. Hiebei entsteht eine Faserpaste, die nestfrei in die mit den Füllstoffen versehene Kautschukmischung eingearbeitet werden kann. Diese Einarbeitung erfolgt in einem der üblichen Mischverfahren (Walze, Kneter), wobei die hochfesten organischen Fasern der beim Mischvorgang auftretenden Scherbeanspruchung weitgehend standhalten und in der Mischung homogen verteilt werden.

Eine Weiterverarbeitung der Mischung wird je nach Verwendungszweck durch Extrudieren, Spritzgießen oder auch Pressen erfolgen.

Der erfindungsgemäße Werkstoff weist eine Reihe von Eigenschaften auf, die ihn für eine Anzahl von Verwendungszwecken, wie weiter unten noch beschrieben wird, besonders geeinget machen. Seine Härte liegt je nach Verwendungszweck etwa zwischen 80 und 95 Shore D. Die Faserverstärkung bewirkt eine hohe mechanische Festigkeit, insbesondere eine hohe Biegefestigkeit und Schlagfestigkeit. Der Harzanteil bringt eine ausgezeichnete Temperaturbeständigkeit mit sich, die, nach DIN 53 460 ermittelt, oberhalb von 250 °C liegt.

Aufgrund dieser hervorragenden Eigenschaften liegt ein bevorzugter Verwendungszweck des erfindungsgemäßen Werkstoffes bei der Lärmdämmung von Verbrennungsmotoren, wobei eine Anzahl der störenden Schallquellen selbst aus diesem Werkstoff gefertigt werden. Hiebei wird als Füllstoff ein schwerer Füllstoff beigemengt, sodaß ein spezifisches Gewicht erzielbar ist, das oberhalb des spezifischen Gewichtes von Aluminium liegt, wodurch ein sehr guter Schallabsorptionseffekt erzielbar ist. Störende Schallquellen an Verbrennungsmotoren sind insbesondere Ventildeckel, Stirnradgetriebedeckel, Ölwanne und Ölkühlerdeckel. Diese Motorbauteile werden ganz oder zumindest teilweise aus dem erfindungsgemäßen Werkstoff gefertigt.

Erfolgt nun die Befestigung des betreffenden, aus dem erfindungsgemäßen Werkstoff gefertigten Motorbauteiles unter Zwischenlegung einer entsprechenden herkömmlichen Dichtung am Motorblock, so erfolgt eine sehr gute Körperschalldämmung sowie eine entsprechende Verminderung des Luftschalles gegenüber der herkömmlichen Ausführung aus Aluminium oder Stahlblech. Diesbezügliche Messungen haben ergeben, daß ohne weiteres ein modales Dämpfungsverhalten erzielbar ist, welches um einen Faktor 10 besser ist, als jenes von Aluminiumbauteilen oder Bauteilen aus Stahlblech. Es hat sich gezeigt, daß insbesondere im akustisch wichtigen Bereich von 1 000 bis 2 000 Hz die Schalldämmwirkung des erfindungsgemäßen Werkstoffes bereits im vollen Ausmaß vorhanden ist.

Im folgenden ist ein Mischungsbeispiel für einen derartigen schalldämmenden Werkstoff, der sich besonders als Material zur Herstellung oben genannter Motorbauteile eignet, angegeben :

Beispiel (Gew. Teile) :

90 Nitrilkautschuk
10 Flüssigkautschuk
35 Vernetzungshilfsmitt (Schwefel)
40 Zinkoxyd

5 Vulkanisationsbeschleuniger
700 schwerer Füllstoff
80 flüssiges Phenolharz
8 Harzvernetzungsmitt
25 Aramidfasern

Durch eine schwingungstechnische Abkoppelung des aus dem erfindungsgemäßen Werkstoff gefertigten Motorbauteiles (beispielsweise des Ventildeckels) gegenüber dem Motorblock wird eine zusätzliche Reduzierung des Körperschallpegels und damit auch des Luftschallpegels erreicht.

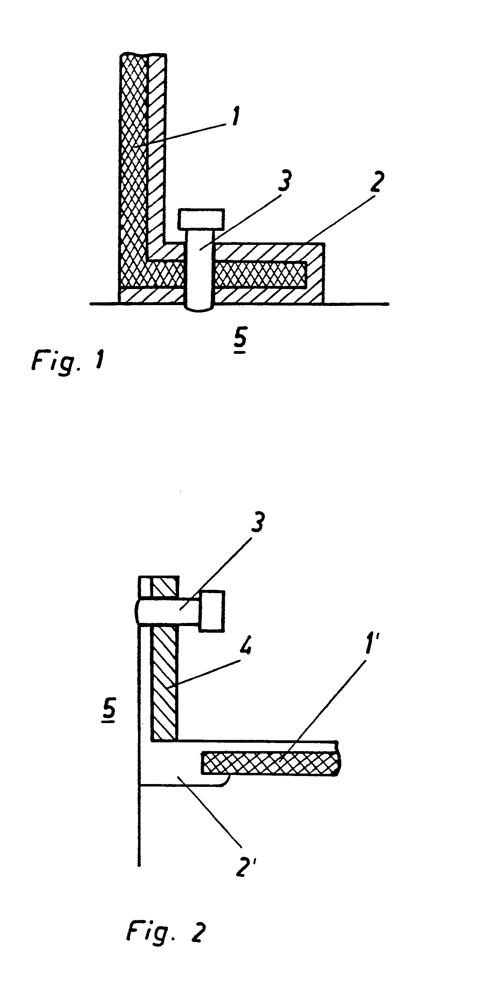

In den Fig. 1 und 2 sind zwei Ausführungsbeispiele dargestellt, die eine derartige schwingungstechnische Abkoppelung durch das Einlegen eines ölfesten, temperaturbeständigen Weichgummis zeigt. Hiebei ist jeweils ein Befestigungsbereich im Schnitt dargestellt, sodaß der mit 1 bezeichnete aus dem erfindungsgemäßen Werkstoff gefertigte Motorbauteil beispielsweise der Stirnradgetriebedeckel, der Ventildeckel oder die Ölwanne sein kann.

Gemäß Fig. 1 ist der zum Befestigen am Motorblock vorgesehene umlaufende Flansch des Motorbauteiles 1 in eine Weichgummilage 2 eingebettet. Hiebei kann der Weichgummi 2, wie in Fig. 1 dargestellt, den gesamten Bauteil 1 überdecken, sodaß ein zusätzlicher positiver Effekt bezüglich Dämpfung des Bauteiles erzielt werden kann.

Bei größeren Schraubabständen kann es zur Aufbringung der erforderlichen Dichtwirkung vorteilhaft sein, den Motorbauteil 1' über einen metallischen Hilfsrahmen 4 am Motorblock 5 zu befestigen, welche Ausführungsvariante in Fig. 2 dargestellt ist. Hiebei ist der dem Motorblock 5 zugeordnete Bereich des Motorbauteiles 1' in Weichgummi 2' eingebettet, zwischen dem Hilfsrahmen 4 und dem Motorblock 5 ist ebenfalls eine Weichgummizwischenlage vorgesehen, sodaß eine schwingungstechnische Abkoppelung gewährleistet ist.

Durch die Weichgummizwischenlage ist es nicht unbedingt notwendig, eine gesonderte Dichtung zu verwenden. Die erforderlichen Dichtungskräfte werden entweder über den Motorbauteil 1 (Fig. 1) oder den Hilfsrahmen 4 (Fig. 2) aufgebracht.

Für den erfindungsgemäßen Werkstoff gibt es eine Vielzahl von Einsatzmöglichkeiten, insbesondere im Motorenbau. Durch entsprechende Variation in der Rezepturgestaltung ist es weiters möglich, die Chemikalienbeständigkeit weiterer Verwendungszwecke im allgemeinen Maschinenbau anzupassen, wo die hohe Festigkeit und Temperaturbeständigkeit ebenfalls von Vorteil sind. So kann beispielsweise eine Mischung durch Einsatz und Auswahl entsprechender Polymere und Füllstoffe besonders gegen heiße Wasser/Glykolgemische beständig gemacht werden. Aus diesem Material lassen sich beispielsweise Wasserpumpenlaufräder für Verbrennungsmotoren herstellen. Wird durch geeignete Maßnahmen (Auswahl von Kautschuk, Füllstoff, Harz) eine chemische Beständigkeit gegenüber heißer Schwefelsäure erhalten, so können aus diesem Werkstoff beispielsweise auch Rohrplatten für Spinnbadverdampfer hergestellt werden.

**Patentansprüche**

1. Werkstoff auf Basis einer Kautschukmischung für Hartgummi, dadurch gekennzeichnet, daß in die Kautschukmischung ein Prämix bestehend aus hochfesten organischen Fasern und einem flüssigen Duroplast eingearbeitet ist.

2. Werkstoff nach Anspruch 1, dadurch gekennzeichnet, daß die hochfesten organischen Fasern mit Flüssigkautschuk vorimprägnierbar sind.

3. Werkstoff nach Anspruch 1 oder 2, dadurch gekennzeichnet, daß in das Prämix als hochfeste organische Fasern Aramidfasern eingearbeitet sind.

4. Werkstoff nach Anspruch 1 oder 2, dadurch gekennzeichnet, daß in das Prämix als hochfeste organische Fasern Polyesterfasern eingearbeitet sind.

5. Werkstoff nach Anspruch 1 oder 2, dadurch gekennzeichnet, daß in das Prämix als hochfeste organische Fasern Polyacrylnitrilfasern eingearbeitet sind.

6. Werkstoff nach einem der Ansprüche 1 bis 5, dadurch gekennzeichnet, daß die hochfesten organischen Fasern eine Länge von etwa 0,5 bis 70 mm, vorzugsweise von 1 bis 60 mm, aufweisen.

7. Werkstoff nach einem der Ansprüche 1 bis 6, dadurch gekennzeichnet, daß der Faseranteil, bezogen auf 100 Gewichtsteile Kautschuk, 10 bis 100 Teile, vorzugsweise bis etwa 60 Teile beträgt.

8. Werkstoff nach einem der Ansprüche 1 bis 7, dadurch gekennzeichnet, daß das flüssige Duroplast ein flüssiges Phenolharz, ein flüssiges Polyesterharz, ein flüssiges Epoxydharz oder Mischungen dieser Harze ist.

9. Werkstoff nach einem der Ansprüche 1 bis 8, dadurch gekennzeichnet, daß der Anteil an flüssigem Duroplast, bezogen auf 100 Gewichtsteile Kautschuk, 20 bis 200 Teile beträgt.

10. Werkstoff nach einem der Ansprüche 1 bis 9, dadurch gekennzeichnet, daß der Kautschuk für die Kautschukmischung ein Nitril- oder ein Naturkautschuk oder eine Mischung dieser beiden ist.

11. Werkstoff nach einem der Ansprüche 1 bis 10, dadurch gekennzeichnet, daß Füllstoffe, vorzugsweise im Ausmaß von 200 bis 1 000 Teile, bezogen auf 100 Teile Kautschuk, beigemengt sind.

12. Werkstoff nach einem der Ansprüche 1 bis 11, dadurch gekennzeichnet, daß er schwere Füllstoffe wie beispielsweise Schwerspat oder ein Metallpulver, enthält.

13. Motorbauteil, beispielsweise Ventildeckel, Stirnradgetriebedeckel, Ölwanne oder Ölkühlerdeckel, dadurch gekennzeichnet, daß er aus einem Werkstoff nach einem der Ansprüche 1 bis 12 gefertigt ist.

14. Motorbauteil nach Anspruch 13, dadurch gekennzeichnet, daß er aus einem Werkstoff auf Basis einer Kautschukmischung für Hartgummi, in die ein Prämix aus einem flüssigen Duroplast mit hochfesten organischen Fasern eingearbeitet ist, gefertigt ist, welche bezogen auf 100 Gewichtsteile Kautschuk, etwa 70 bis 100 Teile Kautschuk, beispielsweise Nitrilkautschuk, bis zu 30 Teile Flüssigkautschuk, 30 bis 50 Teile Vernetzungshilfsmittel, vorzugsweise Schwefel, 30 bis 60 Teile Vulkanisationshilfsmittel, beispielsweise Zinkoxyd, 3 bis 6 Teile Vulkanisationsbeschleuniger, 500 bis 700 Teile schweren Füllstoff, 50 bis 100 Teile flüssiges Duroplast, beispielsweise Phenolharz, etwa 10 % des Phenolharzanteiles Harzvernetzungsmittel und 20 bis 50 Teile hochfeste organische Fasern, beispielsweise Aramidfasern, enthält.

15. Motorbauteil nach Anspruch 13 oder 14, dadurch gekennzeichnet, daß er vom Motorblock schwingungstechnisch abgekoppelt ist.

16. Motorbauteil nach einem der Ansprüche 13 bis 15, dadurch gekennzeichnet, daß zumindest sein zum Befestigen am Motorblock (5) vorgesehener Flansch in eine vorzugsweise ölfeste und temperaturbeständige Weichgummilage (2) eingebettet ist.

17. Motorbauteil nach einem der Ansprüche 13 bis 16, dadurch gekennzeichnet, daß zum Befestigen des Motorbauteiles (1') am Motorblock (5) ein metallischer Hilfsrahmen (4) vorgesehen ist, der getrennt vom Motorbauteil (1') in die Weichgummilage (2') eingebettet ist.

**Claims**

1. A rubber mixture-based material for hard rubber, characterised in that a pre-mixture consisting of high-strength organic fibres and a liquid thermosetting resin, is worked into the rubber mixture.

2. A material as claimed in Claim 1, characterised in that the high-strength organic fibres are previously pre-impregnated with liquid rubber.

3. A material as claimed in Claim 1 or 2, characterised in that aromatic amide (aramide) fibres are worked into the pre-mixture as high-strength organic fibres.

4. A material as claimed in Claim 1 or 2, characterised in that polyester fibres are worked into the pre-mixture as high-strength organic fibres.

5. A material as claimed in Claim 1 or 2, characterised in that polyacrylonitrile fibres are worked into the pre-mixture as high-strength organic fibres.

6. A material as claimed in one of Claims 1 to 5, characterised in that the high-strength organic fibres have a length of about 0.5 to 70 mm, preferably of 1 to 60 mm.

7. A material as claimed in one of Claims 1 to 6, characterised in that the amount of fibres is 10 to 100 parts, preferably up to about 60 parts, per 100 parts by weight of rubber.

8. A material as claimed in one of Claims 1 to 7, characterised in that the liquid thermosetting resin is a liquid phenol resin, a liquid polyester resin, a liquid epoxy resin, or mixtures of these resins.

9. A material as claimed in one of Claims 1 to 8, characterised in that the amount of liquid thermosetting resin is 20 to 100 parts, per 100 parts by weight of rubber.

10. A material as claimed in one of Claims 1 to 9, characterised in that the rubber for the rubber mixture is a nitrile rubber, or a natural rubber, or a mixture of these two.

11. A material as claimed in one of Claims 1 to 10, characterised in that fillers are added, preferably in an amount of 200 to 1 000 parts per 100 parts rubber.

12. A material as claimed in one of Claims 1 to 11, characterised in that it contains heavy fillers, such as, for example, heavy spar, or a metal powder.

13. An engine component, for example, a valve cover, spur wheel gear cover, oil sump or oil cooler cover, characterised in that it is made from a material as claimed in one of Claims 1 to 12.

14. An engine component as claimed in Claim 13, characterised in that it is made of a rubber mixture-based material for hard rubber, into which is worked a pre-mixture of a liquid thermosetting resin with high-strength organic fibres, which mixture contains, per 100 parts by weight of rubber, about 10 to 100 parts rubber, for example nitrile rubber, up to 30 parts liquid rubber, 30 to 50 parts cross-linking assistants, preferably sulphur, 30 to 60 parts vulcanising assistants, for example zinc oxide, 3 to 6 parts vulcanisation accelerator, 500 to 700 parts heavy filler, 50 to 100 parts liquid thermosetting resin, for example phenol resin, about 10 % of the amount of phenol resin of gum, and 20 to 50 parts high-strength organic fibres, for example aramide fibres.

15. An engine component as claimed in Claim 13 or 14, characterised in that it is vibrationally decoupled from the engine block.

16. An engine component as claimed in one of Claims 13 to 15, characterised in that at least its flange which is provided for fastening it to the engine block (5) is embedded in a soft-rubber bed (2) which is preferably oil-resistant and temperature-stable.

17. An engine component as claimed in one of Claims 13 to 16, characterised in that a metal auxiliary frame (4) is provided for fastening the engine component (1') to the engine block (5), this auxiliary frame being embedded in the soft rubber bed (2') separately from the engine component (1').

**Revendications**

1. Matériau à base d'un mélange caoutchouteux pour obtenir du caoutchouc dur, caractérisé par le fait qu'un substrat primaire constitué par des fibres organiques hautement résistantes et par une matière thermodurcissable liquide est incorporé dans le mélange caoutchouteux.

2. Matériau selon la revendication 1, caractérisé par le fait que les fibres organiques hautement résistantes sont pré-imprégnées de caoutchouc liquide.

3. Matériau selon la revendication 1 ou 2, caractérisé par le fait que des fibres d'aramides sont incorporées dans le substrat primaire, en tant que fibres organiques hautement résistantes.

4. Matériau selon la revendication 1 ou 2, caractérisé par le fait que des fibres de polyester sont incorporées dans le substrat primaire, en tant que fibres organiques hautement résistantes.

5. Matériau selon la revendication 1 ou 2, caractérisé par le fait que des fibres de polyacrylonitrile sont incorporées dans le substrat primaire, en tant que fibres organiques hautement résistantes.

6. Matériau selon l'une des revendications 1 à 5, caractérisé par le fait que les fibres organiques hautement résistantes présentent une longueur d'environ 0,5 à 70 mm, de préférence de 1 à 60 mm.

7. Matériau selon l'une des revendications 1 à 6, caractérisé par le fait que la part en fibres représente, par rapport à 100 parts pondérales de caoutchouc, de 10 à 100 parts, de préférence jusqu'à environ 60 parts.

8. Matériau selon l'une des revendications 1 à 7, caractérisé par le fait que la matière thermodurcissable liquide consiste en une résine de phénol liquide, une résine de polyester liquide, une résine époxyde liquide ou en des mélanges de ces résines.

9. Matériau selon l'une des revendications 1 à 8, caractérisé par le fait que la part en matière thermodurcissable liquide représente de 20 à 200 parts, par rapport à 100 parts pondérales de caoutchouc.

10. Matériau selon l'une des revendications 1 à 9, caractérisé par le fait que le caoutchouc mis en œuvre pour le mélange caoutchouteux consiste en un caoutchouc nitrile ou en un caoutchouc naturel, ou bien en un mélange des deux.

11. Matériau selon l'une des revendications 1 à 10, caractérisé par le fait qu'on ajoute des substances de charge représentant, de préférence, de 200 à 1 000 parts par rapport à 100 parts de caoutchouc.

12. Matériau selon l'une des revendications 1 à 11, caractérisé par le fait qu'il renferme des substances de charge lourdes, comme par exemple de la barytine ou une poudre métallique.

13. Pièce constitutive de moteur, par exemple chapeau de soupape, couvercle d'engrenage à pignons droits, carter à huile ou couvercle de radiateur d'huile, caractérisée par le fait qu'elle est fabriquée en un matériau selon l'une des revendications 1 à 12.

14. Pièce constitutive de moteur selon la revendication 13, caractérisée par le fait qu'elle consiste en un matériau à base d'un mélange caoutchouteux pour obtenir du caoutchouc dur, dans lequel est incorporé un substrat primaire consistant en une matière thermodurcissable liquide combinée à des fibres organiques hautement résistantes, ledit mélange renfermant, par rapport à 100 parts pondérales de caoutchouc, d'environ 70 à 100 parts de caoutchouc, par exemple du caoutchouc nitrile ; jusqu'à 30 parts de caoutchouc liquide ; de 30 à 50 parts d'un auxiliaire de réticulation, de préférence du soufre ; de 30 à 60 parts d'un auxiliaire de vulcanisation, par exemple de l'oxyde de zinc ; de 3 à 6 parts d'un accélérateur de vulcanisation ; de 500 à 700 parts d'une substance de charge lourde ; de 50 à 100 parts d'une matière thermodurcissable liquide, par exemple une résine de phénol ; un agent de réticulation de la résine, représentant environ 10 % de la part en résine de phénol ; et de 20 à 50 parts de fibres organiques hautement résistantes, par exemple des fibres d'aramides.

15. Pièce constitutive de moteur selon la revendication 13 ou 14, caractérisée par le fait qu'elle est dissociée du bloc moteur par des mesures techniques antivibratoires.

16. Pièce constitutive de moteur selon l'une des revendications 13 à 15, caractérisée par le fait qu'au moins sa bride, prévue pour la fixation au bloc moteur (5), est noyée dans une couche (2) de caoutchouc tendre présentant de préférence une résistance aux huiles et une stabilité thermique.

17. Pièce constitutive de moteur selon l'une des revendications 13 à 16, caractérisée par le fait qu'il est prévu, pour fixer cette pièce constitutive (1') au bloc moteur (5), un châssis auxiliaire métallique (4) qui est noyé dans la couche (2) de caoutchouc tendre, séparément de la pièce constitutive (1') de moteur.

0 175 043

Fig. 1

Fig. 2